Europäisches Patentamt

**European Patent Office**

Office européen des brevets

(19)

(11) Numéro de publication : **0 081 411**
B1

(12) # FASCICULE DE BREVET EUROPÉEN

(45) Date de publication du fascicule du brevet :
04.03.87

(51) Int. Cl.⁴ : **F 25 B 21/00**

(21) Numéro de dépôt : **82402142.2**

(22) Date de dépôt : **24.11.82**

(54) Procédé de réfrigération ou de pompage de chaleur et dispositif pour la mise en oeuvre de ce procédé.

(30) Priorité : **27.11.81 FR 8122276**

(43) Date de publication de la demande :
**15.06.83 Bulletin 83/24**

(45) Mention de la délivrance du brevet :
**04.03.87 Bulletin 87/10**

(84) Etats contractants désignés :
**DE GB NL**

(56) Documents cités :
FR-A- 997 056
FR-A- 1 516 393
FR-A- 2 383 410
US-A- 3 108 444
US-A- 3 125 861
US-A- 4 033 734
US-A- 4 069 028
INTERNATIONAL CRYOGENIC ENGINEERING
CONFERENCES, vol. 8, Proceedings of the eight
International Cryogenic Engineering Conference, 3-6
juin 1980, pages 213-217, Genova (IT); J.A. BARCLAY
et al.: "Magnetic refrigeration for space applications".
PROCEEDINGS OF THE PHYSICAL SOCIETY, vol. 92,
septembre-décembre 1967, pages 400-407, Londres
(GB); A.H. COOKE et al.: "The magnetic susceptibilities of some rare-earth garnets"
CRYOGENICS, vol. 20, no. 8, août 1980, pages 467-
471, Guildford (GB); J.A. BARCLAY: A 4 K to 20 K
rotational-cooling magnetic refrigerator capable of
1mW to 1W operation".

(73) Titulaire : **COMMISSARIAT A L'ENERGIE ATOMIQUE
Etablissement de Caractère Scientifique Technique
et Industriel
31/33, rue de la Fédération
F-75015 Paris (FR)**

(72) Inventeur : **Bon-Mardion, Gilbert
2, Rue du Moucherotte Poisat
F-38320 Eybens (FR)**
Inventeur : **Claudet, Gérard
20, rue Edouard Vaillant
F-38100 Grenoble (FR)**
Inventeur : **Lacaze, Albert
4, Allée des Marronniers
F-38240 Meylan (FR)**

(74) Mandataire : **Mongrédien, André et al
c/o BREVATOME 25, rue de Ponthieu
F-75008 Paris (FR)**

Jouve, 18, rue St-Denis, 75001 Paris, France

## Description

La présente invention concerne un procédé de réfrigération ou de pompage de chaleur ainsi qu'un dispositif pour la mise en œuvre de ce procédé. Ce procédé et ce dispositif utilisent une substance paramagnétique et un fluide au contact de cette substance ; il s'applique à la réfrigération, notamment à très basse température ainsi qu'au pompage de chaleur.

On sait que la réfrigération et le pompage de chaleur nécessitent des installations semblables. Dans le pompage de chaleur, on utilise la partie de l'installation qui cède de la chaleur à température élevée, au milieu ambiant ou un autre corps. Dans la réfrigération, on utilise au contraire la partie de l'installation qui absorbe, à basse température, de la chaleur du milieu ambiant ou d'un autre corps.

On sait aussi que la réfrigération et le pompage de chaleur peuvent être mis en œuvre à partir d'un cycle thermodynamique dans lequel une certaine quantité de chaleur est empruntée à une source froide tandis qu'une autre quantité de chaleur est restituée à une source chaude. Le cycle thermodynamique le plus classique dans la réfrigération ou le pompage de chaleur, est le cycle de Carnot. Ce cycle comprend généralement, dans le cas d'un moteur, une détente isotherme d'un gaz, suivie d'une détente adiabatique, puis d'une compression isotherme et enfin, d'une compression adiabatique. Durant le parcours de ce cycle, les échanges d'énergie avec l'extérieur sont dans l'ordre : fourniture de chaleur $Q_1$, production de travail $W_1$, enlèvement de chaleur $Q_2$, fourniture de travail $W_2$. Le travail utile W, est donné par la relation :

$$W = W_1 - W_2 = Q_1 - Q_2$$

qui représente l'aire du cycle de Carnot. Le rendement peut alors être exprimé par la relation :

$$r = \frac{W}{Q_1} = \frac{Q_1 - Q_2}{Q_1} = 1 - \frac{Q_2}{Q_1} = 1 - \frac{T_2}{T_1}.$$

Dans cette relation, $T_2$ est la température de la source froide, tandis que $T_1$ est la température de la source chaude.

Le cycle de Carnot est difficile à réaliser avec un bon rendement dans des installations de réfrigération ou de pompage de chaleur à cause des problèmes d'échanges de chaleur qui rendent ces installations difficiles à mettre en œuvre. Des installations fonctionnant selon d'autres cycles sont notamment décrites dans les brevets FR-A-2 383 410, US-A-4 033 734 et US-A-4 069 028.

Le brevet FR-A-2 383 410 décrit un réfrigérateur fonctionnant selon un cycle de stirling et présentant un rendement de Carnot supérieur à 70 %. Selon ce cycle, une substance ferromagnétique est chauffée par un fluide, dans un champ nul, puis aimantée adiabatiquement, puis refroidie par un fluide, dans un champ élevé, puis enfin démagnétisée adiabatiquement. Ce réfrigérateur présente un bon rendement mais a pour inconvénient d'utiliser des aimantations et des désaimantations adiabatiques difficiles à mettre en œuvre.

Le brevet US-A-4 033 734 décrit un réfrigérateur dont le rendement de Carnot est voisin de 70 %. Dans ce réfrigérateur, la source froide est à l'intérieur de la source chaude. Ce réfrigérateur a pour inconvénient d'être difficile à mettre en œuvre puisque, la source froide étant à l'intérieur de la source chaude, il est nécessaire de séparer ces deux sources par une barrière thermique qui est traversée par une roue portant la substance paramagnétique.

Le brevet US-A-4 069 028 décrit une pompe de chaleur utilisant une substance ferromagnétique. Le cycle de fonctionnement comprend :

— une magnétisation de la substance par un champ magnétique, cette magnétisation étant effectuée de façon isotherme, à une température du fluide, voisine d'une première température $T_1$ d'une source chaude,

— un refroidissement de la substance par échange de chaleur avec le fluide, entre la première température $T_1$ et une deuxième température de ce fluide, voisine d'une seconde température $T_2$ d'une source froide,

— une démagnétisation de la substance par un champ magnétique, cette démagnétisation étant effectuée de façon isotherme, à une température voisine de la deuxième température $T_2$,

— un chauffage de la substance par échange de chaleur avec le fluide entre la deuxième température $T_2$ et la première température $T_1$.

Ce réfrigérateur a pour inconvénient, du fait de sa structure, de rendre difficile l'évacuation de la chaleur d'aimantation et, par conséquent, présente un mauvais rendement.

L'invention a pour but de réaliser un réfrigérateur ou une pompe de chaleur mettant en œuvre un procédé qui, tout en permettant d'obtenir un rendement de Carnot supérieur à 70 %, permet de remédier aux inconvénients des dispositifs connus et notamment en fonctionnant selon un cycle ne présentant aucune aimantation ou désaimantation adiabatique, le dispositif ne nécessitant alors pas l'utilisation de barrières thermiques difficiles à mettre en œuvre.

L'invention concerne un procédé de réfrigération ou de pompage de chaleur utilisant une substance paramagnétique et un fluide au contact de cette substance, consistant à effectuer :
— une magnétisation de la substance par un champ magnétique, cette magnétisation étant effectuée de façon isotherme, à une température du fluide voisine d'une première température $T_1$ d'une source chaude,
— un refroidissement de la substance par échange de chaleur avec le fluide entre la première température $T_1$ et une deuxième température de ce fluide voisine d'une seconde température $T_2$ d'une source froide,
— une démagnétisation de la substance par un champ magnétique, cette démagnétisation étant effectuée de façon isotherme, à une température voisine de la deuxième température $T_2$,
— un chauffage de la substance par échange de chaleur avec le fluide entre la deuxième température $T_2$ et la première température $T_1$,
la magnétisation isotherme de la substance étant effectuée en évacuant la chaleur d'aimantation à l'aide du fluide, par déplacements relatifs du fluide et de la substance, le fluide se déplaçant d'abord dans le sens de déplacement de la substance selon un premier courant évacuant la chaleur d'aimantation, puis en sens opposé au sens de déplacement de la substance selon un deuxième courant évacuant la chaleur d'aimantation, ces deux courants étant de sens opposés et se rejoignant avant d'être évacués de sorte que les températures en début et en fin de magnétisation soient identiques.
Selon une autre caractéristique de l'invention le fluide est gazeux.
Selon une autre caractéristique de l'invention, le fluide gazeux utilisé est de l'hélium.
Selon une autre caractéristique, la substance paramagnétique utilisée est un monocristal de grenat de gadolinium et de gallium.
L'invention a aussi pour objet un réfrigérateur comprenant :
— un cryostat de forme torique muni de conduits d'arrivée et de départ d'un fluide, le conduit d'arrivée étant relié à une source chaude à une température $T_1$,
— un support de substance paramagnétique, ce support étant de forme torique et étant entraîné par des moyens pour le faire tourner à l'intérieur du cryostat, dans le sens prédéterminé,
— des moyens pour induire un champ magnétique dans le cryostat, caractérisé en ce que le cryostat est muni d'au moins un premier et second conduits d'arrivée, que les moyens pour induire le champ magnétique sont conçus pour induire un champ magnétique non uniforme, de sorte que ce champ magnétique est faible au voisinage du premier conduit d'arrivée de fluide dont la température est voisine de la température $T_1$ de la source chaude, la valeur du champ magnétique augmentant dans le sens de déplacement du support, un troisième conduit est situé entre les conduits d'arrivée, le fluide amené par ce premier conduit étant à une pression $P_1$ et circulant dans le cryostat dans le sens prédéterminé et dans un sens opposé, de part et d'autre de l'arrivée du premier conduit dans le cryostat, le champ magnétique étant maximal au voisinage du deuxième conduit d'arrivée de fluide dont la température est voisine de la température $T_1$ de la source chaude, le fluide amené par ce deuxième conduit étant à une pression $P_1$-$\Delta P_1$ inférieure à $P_1$, le fluide dont la température est voisine de la température $T_1$ de la source chaude étant évacué par le troisième conduit de départ, le dispositif comprenant en outre un quatrième et cinquième conduits d'arrivée et de départ de ce fluide situés à la partie inférieure, la température du fluide amené par ce quatrième conduit étant voisine de la température $T_2$ d'une source froide, inférieure à la température $T_1$ de la source chaude, le champ produit par les moyens pour induire un champ magnétique étant un champ de désaimantation de la substance entre ces quatrième et cinquième conduits.
Selon une autre caractéristique de l'invention, les moyens pour induire un champ magnétique dans le cryostat sont constitués par des bobines supraconductrices disposées de manière à produire un champ radial dans le cryostat.
Selon une autre caractéristique, les moyens pour induire un champ magnétique dans le cryostat sont constitués par des bobines supraconductrices disposées de manière à produire un champ transversal dans le cryostat.
Selon une autre caractéristique, les moyens pour produire un champ magnétique dans le cryostat sont constitués par des aimants permanents disposés de manière à produire un champ radial dans le cryostat.
Selon une autre caractéristique, les moyens pour induire un champ magnétique dans le cryostat sont constitués par des aimants permanents disposés de manière à produire un champ transversal dans le cryostat.
Selon une autre caractéristique le fluide est gazeux.
Selon une autre caractéristique, le fluide gazeux est de l'hélium.
Selon une autre caractéristique, la substance paramagnétique est un monocristal de grenat de gadolinium et de gallium.
Selon une autre caractéristique, les moyens pour faire tourner le support sont des moyens mécaniques.
Selon une autre caractéristique, les moyens pour faire tourner le support sont des moyens magnétiques.
Les caractéristiques et avantages de l'invention ressortiront mieux de la description qui va suivre, donnée à titre d'exemple illustratif mais non limitatif, en référence aux dessins annexés dans lesquels :
la figure 1 représente le cycle thermodynamique mis en œuvre dans le procédé et le dispositif de

# 0 081 411

l'invention, dans un diagramme entropie (S), température (T) en utilisant un fluide gazeux,

la figure 2 est une vue latérale schématique du dispositif de l'invention,

la figure 3 représente de manière plus détaillée le dispositif de l'invention, pour deux modes de réalisation des moyens qui permettent d'appliquer au cryostat un champ magnétique variable,

la figure 4 représente en (A), (B), (C), (D), (E) différents modes de réalisation du support de substance paramagnétique,

La figure 5 représente un autre mode de réalisation des moyens d'entraînement du support de substance paramagnétique.

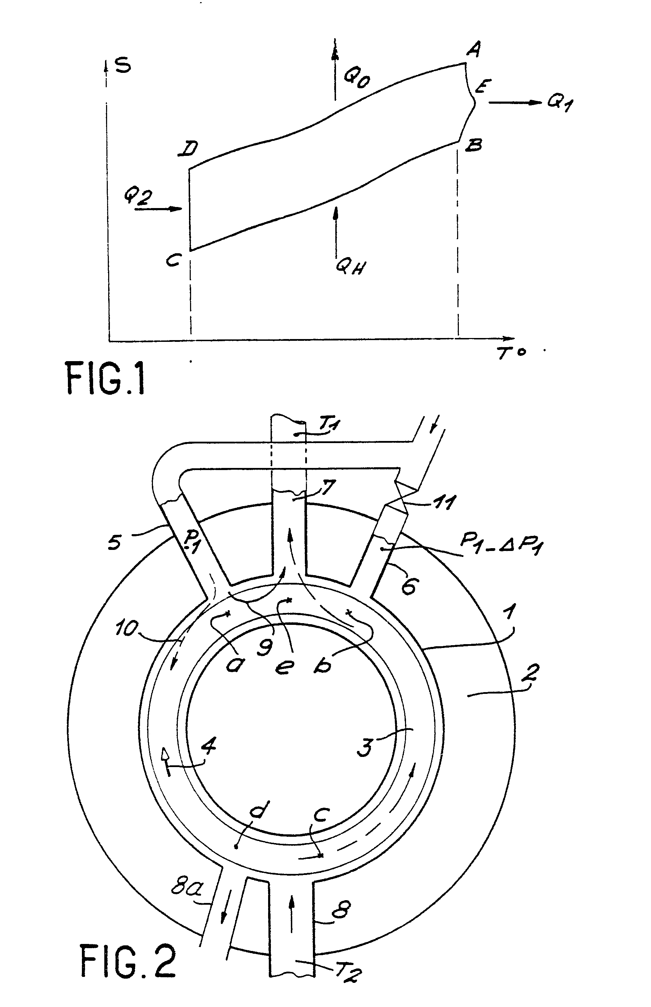

La figure 1 représente dans un diagramme entropie (S)-température (T) le cycle thermodynamique · mis en œuvre dans le procédé et le dispositif de l'invention ; le procédé et le dispositif font intervenir une substance paramagnétique telle qu'un monocristal de grenat de gadolinium et de gallium, et un fluide gazeux tel que l'hélium par exemple.

La substance paramagnétique placée sur un support torique, tourne dans un cryostat de forme torique de sorte que chaque tranche de la substance décrit un cycle qui comprend tout d'abord une magnétisation de la substance à une température sensiblement constante, voisine d'une température $T_1$ d'une source chaude constituée par le fluide gazeux, à cette température. Cette magnétisation isotherme est représentée par la partie AB du cycle ; au cours de cette magnétisation, une quantité de chaleur $Q_1$ est cédée à la source chaude à la température $T_1$, un champ magnétique croissant est appliqué à la substance à partir d'une valeur très faible au point A, jusqu'à une valeur maximale au point B. La substance est ensuite refroidie entre les points B et C, par contact avec le fluide gazeux circulant dans un sens opposé au sens de déplacement de la substance. Durant son refroidissement, la substance cède une quantité de chaleur $Q_H$ au fluide gazeux ; sa température varie entre la température $T_1$ de la source chaude et la température $T_2$ d'une source froide constituée par du fluide gazeux à cette température. Ce refroidissement de la substance se fait dans une zone de champ magnétique constant ou de champ magnétique dont la variation est calculée pour que la substance présente le meilleur échange thermique possible avec le fluide gazeux. La substance est ensuite désaimantée entre les points C et D, à une température constante voisine de la température $T_2$ de la source froide. Durant cette désaimantation à température constante, la substance absorbe une quantité de chaleur $Q_2$ provenant de la source froide à la température $T_2$. Enfin, entre les points D et A, la substance est chauffée depuis la température $T_2$ de la source froide jusqu'à la température $T_1$ de la source chaude, par contact avec le fluide gazeux circulant en sens inverse du déplacement de la substance. Durant ce chauffage, qui est pratiqué à champ magnétique quasiment nul, la substance absorbe une quantité de chaleur $Q_0$ qui est rendue égale à la quantité de chaleur $Q_H$ cédée par la substance durant son refroidissement entre les points b et c. Cette égalité est obtenue grâce à un champ magnétique nul ou un champ magnétique à variation prédéterminée, pour le parcours BC du cycle.

Le procédé et le dispositif utilisant ce cycle permettent d'obtenir un rendement supérieur à 70 % du rendement du cycle de Carnot décrit plus haut.

La figure 2 représente de manière très schématique une vue latérale du dispositif de l'invention.

Sur cette figure, les points a, b, c, d et e permettent d'établir une correspondance, comme on le verra plus loin en détail, avec les points A, B, C, D et E du cycle de la figure 1. Le dispositif représenté sur cette figure comprend un cryostat 1 de forme torique enfermé dans une enceinte vide 2. Il comprend aussi un support torique 3 de substance paramagnétique (non représentée sur cette figure). Ce support est entraîné en rotation à l'intérieur du cryostat 1 par des moyens (non représentés) qui seront décrits plus loin en détail. Le sens de rotation de ce support est indiqué par la flèche 4. Le cryostat 1 est muni d'un premier et d'un second conduits 5, 6, d'arrivée de fluide gazeux (hélium par exemple) et d'un troisième conduit 7 de départ de fluide gazeux. Ce conduit de départ est situé entre les conduits d'arrivée 5, 6 par exemple.

Les conduits 5, 6, 7 sont reliés à une source chaude (hélium par exemple) à la température $T_1$ ; ils forment avec cette source un circuit fermé.

Le dispositif comprend aussi un quatrième conduit 8 d'arrivée de fluide gazeux dans le cryostat et un cinquième conduit de départ 8a, ces conduits sont situés à la partie inférieure et ils sont reliés à une source froide à une température $T_2$, telle qu'une source (non représentée) d'hélium à faible température, $T_2$ étant inférieur à $T_1$. Enfin, le dispositif comprend des moyens (non représentés) qui seront décrits plus loin en détail et qui permettent d'induire un champ magnétique non uniforme dans le cryostat. Ce champ magnétique est faible au voisinage du premier conduit 5 d'arrivée de fluide gazeux dont la température est voisine de la température $T_1$ de la source chaude ; le fluide gazeux qui est amené par le premier conduit 5 est à une pression $P_1$ ; il circule dans le cryostat, de part et d'autre de l'arrivée du conduit 5 dans le cryostat, soit dans le sens prédéterminé de rotation du support 3, tel que représenté par la flèche 9, soit en sens opposé à ce sens prédéterminé tel que représenté par la flèche 10. Les moyens qui permettent d'induire un champ magnétique sont agencés pour que le champ magnétique soit faible au voisinage du premier conduit 5 et qu'il soit maximal au voisinage du deuxième conduit 6. La pression $P_1$-$\Delta P_1$ du fluide gazeux amené par le deuxième conduit 6 est inférieure à la pression $P_1$ du fluide gazeux amené par le premier conduit 5. Cette pression est fixée par une vanne 11 et le fluide gazeux est évacué à une pression $P_0$ par le troisième conduit 7, vers la source chaude à la température $T_1$. La différence de pression $\Delta P_1$ permet de faire circuler de l'hélium en quantité réglable autour de la substance

4

paramagnétique en sens inverse de la rotation du support 3. Il est ainsi possible de refroidir la substance de B en C de $T_1$ à $T_2$ et de la réchauffer de D en A sans perte de chaleur (cycle de la figure 1).

Les moyens qui permettent d'induire un champ magnétique induisent, entre les conduits 8 et 8a qui permettent d'amener et d'évacuer un fluide gazeux à la température $T_2$ de la source froide, un champ magnétique de désaimantation de la substance. Ces moyens permettent aussi de produire un champ constant (ou un champ dont la variation est calculée) entre le deuxième conduit 6 et le quatrième conduit 8, tandis que le champ magnétique est nul entre le cinquième conduit 8a et le premier conduit 5. Chaque tranche de substance paramagnétique portée par le support torique 3 qui se déplace en rotation à l'intérieur du cryostat 1 décrit le cycle de la figure 1. En effet, si l'on considère au départ une tranche de substance paramagnétique située en regard du point a, cette substance est aimantée grâce aux moyens d'induction magnétique entre les points a et b, à température $T_1$ sensiblement constante et elle cède une quantité de chaleur $Q_1$ à la source chaude. La température est légèrement inférieure à $T_1$ en regard des premier et deuxième conduits 5, 6 d'arrivée de fluide gazeux, tandis qu'elle est très voisine de $T_1$ en regard du conduit d'évacuation 7. Cette légère variation est représentée par le point E du cycle de la figure 1. Le point E du cycle correspond en fait à la température en regard du conduit d'évacuation 7. La substance paramagnétique est ensuite refroidie entre les points b et c par contact avec le fluide gazeux parvenant de la source froide à la température $T_2$, ce fluide gazeux circulant en sens inverse du sens de rotation 4 du support. Entre les points b et c la substance cède une quantité de chaleur $Q_H$ à l'hélium. Cette transformation, comme on l'a mentionné plus haut, s'effectue dans une zone de champ magnétique constant ou à champ dont la variation est calculée pour avoir le meilleur échange possible de chaleur avec l'hélium. La substance est ensuite désaimantée entre les points c et d, en regard de la source froide, à température constante $T_2$. Durant cette désaimantation, elle absorbe une quantité de chaleur $Q_2$ provenant de la source froide à la température $T_2$. La température de la substance s'élève ensuite entre les points d et a jusqu'à la température $T_1$, par contact avec le fluide gazeux circulant en sens inverse (flèche 10), dans une zone du champ magnétique nul (ou à variation calculée). Elle absorbe alors une quantité de chaleur $Q_0$ provenant du fluide gazeux. Cette quantité de chaleur $Q_0$ est égale à la quantité de chaleur $Q_H$ cédée à l'hélium durant le refroidissement ; cette égalité est obtenue grâce à l'absence de champ magnétique ou grâce à un champ magnétique à variation calculée entre les points d et a. On suppose bien entendu que dans le dispositif qui vient d'être décrit, la pression $P_0$ dans le troisième conduit 7 est inférieure aux pressions $P_1$ et $P_1$-$\Delta P_1$ du fluide gazeux dans les premier et deuxième conduits 5, 6 pour permettre l'évacuation de ce fluide vers la source chaude à la température $T_1$.

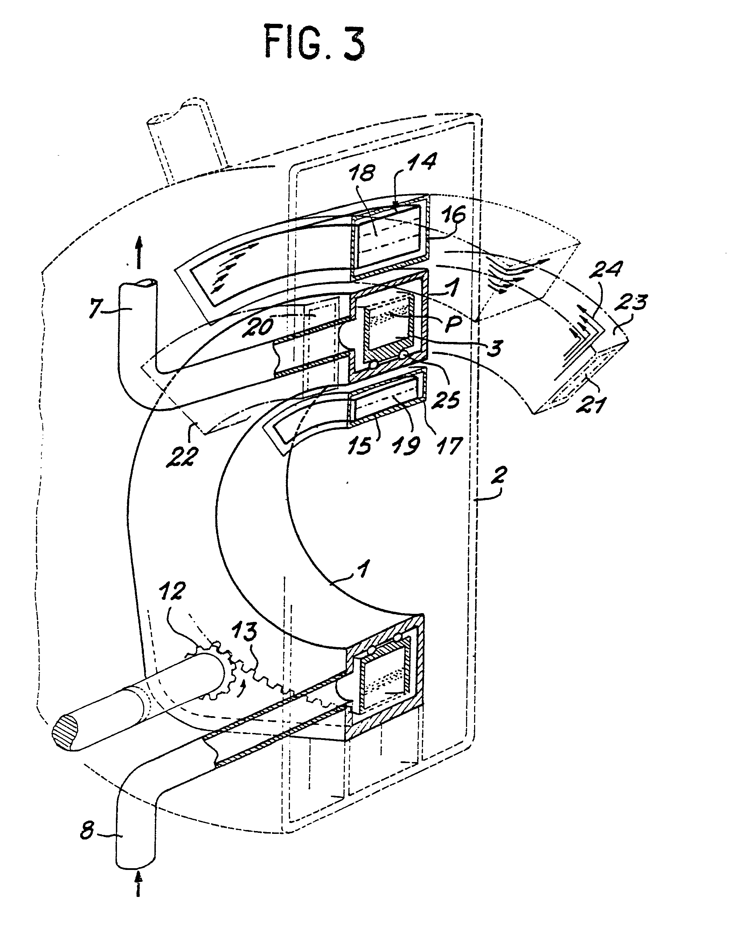

La figure 3 représente de manière plus détaillée le dispositif de l'invention, pour deux modes de réalisation de celui-ci. Les mêmes éléments portent les mêmes références sur cette figure et sur la figure 2. On distingue sur cette figure le cryostat dans lequel tourne le support 3 de substance paramagnétique P.

Selon un mode de réalisation, les moyens d'entraînement de ce support sont de type mécanique et sont constitués, par exemple, par un pignon 12 entraîné par un moteur (non représenté sur cette figure) et s'engageant sur une couronne dentée 13 réalisée sur le pourtour du support 3. Le cryostat 1 est logé à l'intérieur de l'enceinte vide 2 ; on a représenté sur cette figure, le troisième conduit 7 d'évacuation de fluide gazeux ainsi que le quatrième conduit 8 d'arrivée de fluide gazeux à la température $T_2$ de la source froide. Les autres conduits n'ont pas été représentés sur cette figure pour ne pas en compliquer la représentation.

Selon un mode de réalisation particulier, les moyens qui permettent d'induire un champ magnétique dans le cryostat sont constitués par des bobines supraconductrices 14, 15 disposées de part et d'autre du cryostat 1, de manière à induire dans celui-ci un champ radial. Ces bobines sont bien entendu contenues dans les cryostats 16, 17. Elles sont constituées par des enroulements supraconducteurs 18, 19 bobinés sur des noyaux ayant la forme de portions de tores. Sur cette figure et pour ce mode de réalisation des moyens qui permettent d'induire un champ magnétique dans le cryostat, on n'a représenté ces moyens qu'en regard des premier, deuxième et troisième conduits 5, 6, 7. Il est bien évident que des bobines de même type dont le bobinage est calculé en fonction du champ désiré, sont situées dans la même manière autour du cryostat de manière à créer les champs magnétiques décrits plus haut.

Selon un autre mode de réalisation, les moyens qui permettent d'induire des champs magnétiques dans le cryostat, sont aussi constitués des bobines supraconductrices 20, 21 disposées dans des cryostats 22, 23 et placées de part et d'autre du cryostat 1, parallèlement à ses faces latérales, de manière à induire dans celui-ci un champ magnétique transversal. Comme dans le cas précédent, ces bobines sont formées d'enroulements 24 de fils supraconducteurs bobinés sur un noyau ayant la forme d'une portion de tore. Comme dans le mode de réalisation précédent, ces bobines n'ont été représentées qu'en regard des premier, deuxième et troisième conduits 5, 6, 7 (figure 2), mais il est bien évident que d'autres bobines (non représentées) sont disposées autour du cryostat, en fonction des champs magnétiques à obtenir.

La rotation du support 3 dans le cryostat 1 peut être facilitée par des billes 25 disposées entre le support 3 et le cryostat.

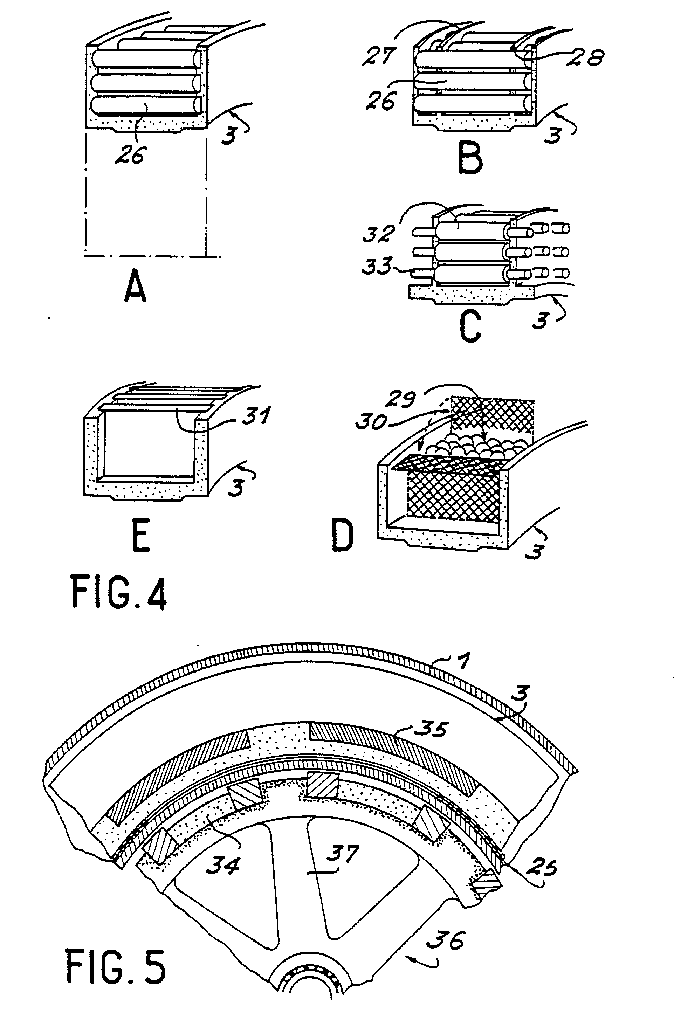

La figure 4 représente différents modes de réalisation du support 3 de substance paramagnétique.

Dans le mode de réalisation représenté en (A), la substance paramagnétique se présente sous la forme de barreaux 26 maintenus par les faces latérales du support 3.

Dans le mode de réalisation représenté en (B), les barreaux 26 de substance paramagnétique sont maintenus par des entretoises 27, 28 ayant la forme de rondelles perforées et situées entre les faces latérales du support 3.

Dans le mode de réalisation représenté en (C), la substance paramagnétique forme des barreaux 32 dont chaque extrémité 33, de plus faible diamètre, vient s'engager dans des perforations des faces latérales du support 3.

Dans le mode de réalisation représenté en (D), la substance paramagnétique se présente sous la forme de billes 29 maintenues entre les faces latérales du support 3, par un grillage 30.

Enfin, dans le mode de réalisation représenté en (E), la substance paramagnétique se présente sous la forme de plaquettes 31 venant s'engager dans des rainures réalisées dans les faces latérales du support 3.

La figure 5 représente schématiquement une vue latérale du support torique 3 et de ses moyens d'entraînement 36 qui, selon un autre mode de réalisation représenté sur cette figure, sont constitués par une roue 37 munie sur sa périphérie, d'aimants permanents 34, disposés en regard de pièces en fer 35 qui sont solidaires du support 3. On a également représenté sur cette figure, les billes 25 qui facilitent la rotation du support à l'intérieur du cryostat 1. Dans ce mode de réalisation, les aimants permanents d'entraînement sont aimantés par un champ très intense supérieur à 10 Tesla et ils ne sont pas perturbés par les champs appliqués au cryostat, qui sont inférieurs à 10 Tesla.

Dans le dispositif qui vient d'être décrit, seules ont été décrites des bobines supraconductrices pour appliquer les champs magnétiques mentionnés plus haut, sur chacune des parties du cryostat. Ces bobines pourraient éventuellement être remplacées par des aimants permanents, mais le choix des bobines supraconductrices ou d'aimants permanents résulte des applications du dispositif. En effet, ce dispositif permet d'atteindre des températures très basses de la source froide lorsque les champs magnétiques sont créés par des bobines supraconductrices.

Il est bien évident que dans le dispositif qui vient d'être décrit, les différents moyens auraient pu être remplacés par des moyens équivalents, sans sortir du cadre de l'invention.

Il est bien évident aussi que le dispositif peut constituer un réfrigérateur ou une pompe de chaleur puisqu'une quantité de chaleur $Q_2$ est empruntée à la source froide et qu'une quantité de chaleur $Q_1$ est restituée à la source chaude.

## Revendications

1. Procédé de réfrigération ou de pompage de chaleur utilisant une substance paramagnétique et un fluide au contact de cette substance, consistant à effectuer :
— une magnétisation de la substance par un champ magnétique, cette magnétisation étant effectuée de façon isotherme, à une température du fluide, voisine d'une première température $T_1$ d'une source chaude,
— un refroidissement de la substance par échange de chaleur avec le fluide, entre la première température $T_1$ et une deuxième température de ce fluide, voisine d'une seconde température $T_2$ d'une source froide,
— une démagnétisation de la substance par un champ magnétique, cette démagnétisation étant effectuée de façon isotherme, à une température voisine de la deuxième température $T_2$,
— un chauffage de la substance par échange de chaleur avec le fluide entre la deuxième température $T_2$ et la première température $T_1$,
caractérisé en ce que la magnétisation isotherme de la substance est effectuée en évacuant la chaleur d'aimantation à l'aide du fluide, par déplacements relatifs du fluide et de la substance, le fluide se déplaçant d'abord dans le sens de déplacement de la substance selon un premier courant évacuant la chaleur d'aimantation, puis en sens opposé au sens de déplacement de la substance selon un deuxième courant évacuant la chaleur d'aimantation, ces deux courants étant de sens opposés et se rejoignant avant d'être évacués de sorte que les températures en début et en fin de magnétisation soient identiques.

2. Procédé selon la revendication 1, caractérisé en ce que le fluide est gazeux.

3. Procédé selon la revendication 2, caractérisé en ce que le fluide gazeux utilisé est de l'hélium.

4. Procédé selon la revendication 1, caractérisé en ce que la substance paramagnétique utilisée est un monocristal de grenat de gadolinium et de gallium.

5. Dispositif de réfrigération ou de pompage de chaleur pour la mise en œuvre du procédé selon la revendication 1, comprenant :
— un cryostat (1) de forme torique muni de conduits d'arrivée et de départ d'un fluide, le conduit d'arrivée étant relié à une source chaude à une température $T_1$,
— un support (3) de substance paramagnétique (P), ce support étant de forme torique et étant entraîné par des moyens pour le faire tourner à l'intérieur du cryostat, dans un sens prédéterminé (4),
— de moyens (14, 15 ou 20, 21) pour induire un champ magnétique dans le cryostat, caractérisé en ce que le cryostat est muni d'au moins un premier et second conduits d'arrivée, que les moyens pour induire le champ magnétique sont conçus pour induire un champ magnétique non uniforme, de sorte que ce champ magnétique est faible au voisinage du premier conduit (5) d'arrivée de fluide dont la température est voisine de la température $T_1$ de la source chaude, la valeur de ce champ magnétique augmentant dans le sens de déplacement du support, un troisième conduit est situé entre les conduits d'arrivée, le fluide amené par le premier conduit d'arrivée de fluide étant à une pression $P_1$ et circulant dans le cryostat dans le sens prédéterminé (4) et dans un sens opposé (10), de part et d'autre de l'arrivée du premier conduit (5) dans le cryostat, le champ magnétique étant maximal au voisinage du deuxième conduit (6) d'arrivée de fluide dont la température est voisine de la température $T_1$ de la source chaude, le fluide amené par ce deuxième conduit (6) étant à une pression $P_1$-$\Delta P_1$ inférieure à $P_1$, le fluide dont la température est voisine de la température $T_1$ de la source chaude étant évacué par le troisième conduit de départ (7), le dispositif comportant en outre un quatrième conduit (8) d'arrivée de ce fluide et un cinquième conduits de départ (8a) situés à la partie inférieure du dispositif, la température du fluide amené par ce quatrième conduit (8) étant voisine de la température $T_2$ d'une source froide, inférieure à la température $T_1$ de la source chaude, le champ produit par les moyens (14, 15 ou 20, 21) pour induire un champ magnétique étant un champ de désaimantation de la substance (P), entre ces quatrième conduit (8) et cinquième conduit (8a).

6. Dispositif selon la revendication 5, caractérisé en ce que les moyens pour induire un champ magnétique dans le cryostat sont constitués par des bobines supraconductrices (14, 15) disposées de manière à produire un champ radial dans le cryostat (1).

7. Dispositif selon la revendication 5, caractérisé en ce que les moyens pour induire un champ magnétique dans le cryostat sont constitués par des bobines supraconductrices (20, 21) disposées de manière à produire un champ transversal dans le cryostat (1).

8. Dispositif selon la revendication 5, caractérisé en ce que les moyens pour induire un champ magnétique dans le cryostat sont constitués par des aimants permanents disposés de manière à produire un champ radial dans le cryostat.

9. Dispositif selon la revendication 5, caractérisé en ce que les moyens pour induire un champ magnétique dans le cryostat sont constitués par des aimants permanents disposés de manière à produire un champ transversal dans le cryostat.

10. Dispositif selon la revendication 5, caractérisé en ce que le fluide est gazeux.

11. Dispositif selon la revendication 10, caractérisé en ce que le fluide gazeux est de l'hélium.

12. Dispositif selon la revendication 5, caractérisé en ce que la substance paramagnétique (P) est un monocristal de grenat de gadolinium et de gallium.

13. Dispositif selon la revendication 5, caractérisé en ce que les moyens pour faire tourner le support sont des moyens mécaniques (12, 13).

14. Dispositif selon la revendication 5, caractérisé en ce que les moyens pour faire tourner le support sont des moyens magnétiques (34, 35).

## Claims

1. A refrigerating or heat pumping process using a paramagnetic substance and a fluid in contact therewith, wherein it comprises performing :
— a magnetization of the substance by a magnetic field, said magnetisation being performed thermally at a fluid temperature close to a first temperature $T_1$ of a heat source ;
— a cooling of the substance by heat exchange with the fluid between the first temperature $T_1$ and a second temperature of said fluid close to a second temperature $T_2$ of a cold source ;
— a demagnetization of the substance by a magnetic field, said demagnetization being performed isothermally, at a temperature close to the second temperature $T_2$ ;
— a heating of the substance by heat exchange with the fluid between the second temperature $T_2$ and the first temperature $T_1$ ;
the isothermal magnetization of the substance being performed by removing the magnetization heat by means of the fluid, by relative displacements of the fluid and the substance, the fluid firstly displacing in the displacement direction of the substance and then in the direction opposite thereto, in such a way that the temperatures at the start and finish of magnetization are the same.

2. Process according to claim 1, wherein the fluid is gaseous.

3. A process according to claim 2, wherein the gaseous fluid used is helium.

4. A process according to claim 1, wherein the paramagnetic substance used is a monocrystal of gadolinium garnet and gallium.

5. A refrigerating or heat pumping apparatus for performing the process according to claim 1, wherein it comprises :
— a toroidal cryostat, provided with at least first and second supply pipes and a third discharge pipe for the fluid, said third discharge pipe being positioned between the supply pipes, which are connected to a hot source at temperature $T_1$ ;
— a paramagnetic substance support having a toroidal shape and driven by means which rotate it whithin the cryostat in a predetermined direction ;
— means for inducing a non-uniform magnetic field in the cryostat, in such a way that this magnetic field is low in the vicinity of the first fluid supply pipe, whose temperature is close to the temperature $T_1$ of

0 081 411

the hot source, the fluid supplied by said first pipe being at pressure $P_1$ and circulating in the cryostat in the predetermined direction and in an opposite direction, on either side of the entry point of the first pipe into the cryostat, the magnetic field being at a maximum in the vicinity of the first fluid supply pipe, whose temperature is close to the temperature $T_1$ of the hot source, the fluid supplied by said second pipe being at pressure $P_1$-$\Delta P_1$ below $P_1$ the fluid whose temperature is close to the temperature $T_1$ of the hot source being discharged by the third discharge pipe ;

— fourth and fifth supply and discharge pipes for the said fluid located in the lower part, the temperature of the fluid supplied by this fourth pipe being close to the temperature $T_2$ of a cold source, below the temperature $T_1$ of the hot source, the field produced by the means for inducing a magnetic field being a demagnetization field of the substance between said fourth and fifth pipes.

6. An apparatus according to claim 5, wherein the means for inducing a magnetic field in the cryostat are constituted by superconducting coils disposed in such a way as to produce a radial field in the cryostat.

7. An apparatus according to claim 5, wherein the means for inducing a magnetic field in the cryostat are constituted by superconducting coils disposed so as to produce a transverse field in the cryostat.

8. An apparatus according to claim 5, wherein the means for inducing a magnetic field in the cryostat are constituted by permanent magnets disposed in such a way as to produce a radial field in the cryostat.

9. An apparatus according to claim 4, wherein the means for inducing a magnetic field in the cryostat are constituted by permanent magnets disposed in such a way as to produce a transverse field in the cryostat.

10. An apparatus according to claim 5, wherein the fluid is gaseous.

11. An apparatus according to claim 10, wherein the gaseous fluid is helium.

12. An apparatus according to claim 5, wherein the paramagnetic substance is a monocrystal of gadolinium garnet and gallium.

13. An apparatus according to claim 5, wherein the means for rotating the support are mechanical means.

14. An apparatus according to claim 5, wherein the means for rotating the support are magnetic means.

## Patentansprüche

1. Verfahren zur Kühlung oder zum Pumpen von Wärme, bei dem ein paramagnetischer Stoff und ein mit diesem Stoff in Berührung stehendes Fluid verwendet wird und das darin besteht, durchzuführen :

— eine Magnetisierung des Stoffes durch ein Magnetfeld, wobei diese magnetisierung isotherm bei einer Temperatur des Fluids durchgeführt wird, die nahe bei einer ersten Temperatur $T_1$ einer Wärmequelle liegt,

— eine Abkühlung des Stoffes durch Wärmeaustausch mit dem Fluid zwischen der ersten Temperatur $T_1$ und einer zweiten Temperatur dieses Fluids, die nahe einer zweiten Temperatur $T_2$ einer kalten Quelle liegt,

— eine Entmagnetisierung des Stoffes durch ein Magnetfeld, wobei diese Entmagnetisierung isotherm bei einer Temperatur nahe der zweiten Temperatur $T_2$ durchgeführt wird,

— eine Erwärmung des Stoffes durch Wärmeaustausch mit dem Fluid zwischen der zweiten Temperatur $T_2$ und der ersten Temperatur $T_1$,

dadurch gekennzeichnet, daß die isotherme Magnetisierung des Stoffes durchgeführt wird, indem die Magnetisierungswärme mittels des Fluids durch eine relative Bewegung des Fluids und des Stoffes durchgeführt wird, wobei sich das Fluid zunächst im Bewegungssinn des Stoffes längs eines ersten, die Magnetisierungswärme abführenden Stromes und dann im zu dem Bewegungssinn des Stoffes entgegengesetzten Sinn längs eines zweiten die Magnetisierungswärme abführenden Stromes bewegt wird, und daß die zwei Ströme entgegengesetzten Sinn aufweisen und sich vereinigen, bevor sie abgeführt werden, so daß die Temperaturen zu Beginn und am Ende der Magnetisierung identisch sind.

2. Verfahren nach Anspruch 1, dadurch gekennzeichnet, daß das Fluid gasförmig ist.

3. Verfahren nach Anspruch 2, dadurch gekennzeichnet, daß das verwendete, gasförmige Fluid Helium ist.

4. Verfahren nach Anspruch 1, dadurch gekennzeichnet, daß der verwendete, paramagnetische Stoff ein Gadolinium-Gallium-Granat-Einkristall ist.

5. Vorrichtung zur Kühlung oder zum Pumpen von Wärme zur Durchführung des Verfahren nach Anspruch 1, mit

— einem torusförmigen Kryostat (1), der Leitungen zum Zuführen und Abführen eines Fluids aufweist, wobei die Zuführleitung mit einer Wärmequelle auf einer Temperatur $T_1$ verbunden ist,

— einem Träger (3) für den paramagnetischen Stoff (P), wobei dieser Träger torusförmig ist und von Mitteln angetrieben wird, um ihn im Inneren des Kryostaten mit einem vorbestimmten Sinn (4) zu drehen,

— Mitteln (14, 15 oder 20, 21), um in dem Kryostat ein Magnetfeld hervorzurufen, dadurch gekennzeichnet, daß der Kryostat mit wenigstens einer ersten und zweiten Zuführleitung versehen ist, daß die Mittel zum Hervorrufen des Magnetfeldes ausgebildet sind, um ein ungleichförmiges Magnetfeld

8

derart hervorzurufen, daß das Magnetfeld nahe der ersten Zuführleitung (5) für das Fluid schwach ist, dessen Temperatur nahe der Temperatur $T_1$ der Wärmequelle ist, daß die Größe des Magnetfeldes im Bewegungssinn des Trägers zunimmt, daß eine dritte Leitung zwischen den Zuführleitungen angeordnet ist, sich das durch die erste Fluidzuführleitung zugeführte Fluid auf einem Druck $P_1$ befindet und in dem Kryostat im vorbestimmten Sinn und im entgegengesetzten Sinn (10) beidseitig der Mündung der ersten Leitung (5) in den Kryostat strömt, daß das Magnetfeld nahe der zweiten Leitung (6) zum zuführen des Fluids maximal ist, dessen Temperatur nahe der Temperatur $T_1$ der Wärmequelle ist, daß das durch die zweite Leitung (6) zugeführte Fluid einen Druck $P_1-\Delta P_1$ aufweist, der niedriger als $P_1$ ist, daß das Fluid, dessen Temperatur nahe der Temperatur $T_1$ der Wärmequelle ist, durch die dritte Abflußleitung (7) fortgeführt wird, daß die Vorrichtung ferner

— eine vierte Zuführleitung (8) für dieses Fluid und eine fünfte Abführleitung (8a) aufweist, die sich am unteren Abschnitt der Vorrichtung befinden, daß die Temperatur des durch die vierte Leitung (8) zugeführten Fluids nahe der Temperatur $T_2$ einer Kältequelle mit einer unter der Temperatur $T_1$ der Wärmequelle liegenden Temperatur ist und daß das von den Mitteln (14, 15 oder 20, 21) zum hervorrufen eines Magnetfeldes erzeugte Magnetfeld ein Entmagnetisierungsfeld des Stoffes P zwischen dieser vierten Leitung (8) und dieser fünften Leitung (8a) ist.

6. Vorrichtung nach Anspruch 5, dadurch gekennzeichnet, daß die Mittel zum Hervorrufen eines Magnetfeldes in dem Kryostat von supraleitenden Spulen (14, 15) gebildet sind, die derart angeordnet sind, daß ein radiales Feld in dem Kryostat erzeugt wird.

7. Vorrichtung nach Anspruch 5, dadurch gekennzeichnet, daß die Mittel zum Hervorrufen eines Magnetfeldes in dem Kryostat von supraleitenden Spulen (20, 21) gebildet sind, die derart angeordnet sind, daß ein in den Kryostat (1) querverlaufendes Feld erzeugt wird.

8. Vorrichtung nach Anspruch 5, dadurch gekennzeichnet, daß die Mittel zum Hervorrufen eines Magnetfeldes in dem Kryostat von Permanentmagneten gebildet sind, die derart angeordnet sind, daß ein radiales Feld in dem Kryostat erzeugt wird.

9. Vorrichtung nach Anspruch 5, dadurch gekennzeichnet, daß die Mittel zum Hervorrufen eines Magnetfeldes in dem Kryostat von Permanentmagneten gebildet sind, die derart angeordnet sind, daß ein in dem Kryostat querverlaufendes Feld erzeugt wird.

10. Vorrichtung nach Anspruch 5, dadurch gekennzeichnet, daß das Fluid gasförmig ist.

11. Vorrichtung nach Anspruch 10, dadurch gekennzeichnet, daß das gasförmige Fluid Helium ist.

12. Vorrichtung nach Anspruch 5, dadurch gekennzeichnet, daß der paramagnetische Stoff (P) ein Grenat-Gadolinium-Gallium-Einkristall ist.

13. Vorrichtung nach Anspruch 5, dadurch gekennzeichnet, daß die Mittel zum Drehen des Trägers mechanische Mittel (12, 13) sind.

14. Vorrichtung nach Anspruch 5, dadurch gekennzeichnet, daß die Mittel zum Drehen des Trägers magnetische Mittel (34, 35) sind.

FIG.1

FIG.2

# FIG. 3

0 081 411

FIG.4

FIG.5

3